(19) Europäisches Patentamt
European Patent Office
Office européen des brevets

(11) **EP 4 600 764 A1**

(12) **EUROPÄISCHE PATENTANMELDUNG**

(43) Veröffentlichungstag:
**13.08.2025 Patentblatt 2025/33**

(21) Anmeldenummer: **24156522.5**

(22) Anmeldetag: **08.02.2024**

(51) Internationale Patentklassifikation (IPC):
**G05B 13/02** *(2006.01)* **B25J 9/16** *(2006.01)*

(52) Gemeinsame Patentklassifikation (CPC):
**G05B 13/0265**; B25J 9/163; G05B 2219/33056

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Swazinna, Phillip**
**85375 Neufahrn (DE)**
• **Udluft, Steffen**
**82223 Eichenau (DE)**

(74) Vertreter: **Siemens Patent Attorneys**
**Postfach 22 16 34**
**80506 München (DE)**

(54) **STEUERN EINER MASCHINE MIT LERNBASIERTER STEUEREINRICHTUNG**

(57) Die Erfindung betrifft ein computerimplementiertes Verfahren zum Steuern einer Maschine (M) mittels einer trainierten lernbasierten Steuereinrichtung (CTL). Das Training der Steuereinrichtung (CTL) erfolgte unter Verwendung einer Zielfunktion, welche eine Gewichtung zweier Größen beinhaltet, und zwar einer Performanz der Maschine (M) gegenüber einer Abweichung von jeweils einer bestimmten Aktionsauswahlregel aus einer Mehrzahl von Aktionsauswahlregeln. Beim Steuern ermittelt die zuvor trainierte Steuereinrichtung (CTL) Betriebs-Steuersignale (AO) basierend auf ihr zur Verfügung gestellten Betriebs-Zustandssignalen (SO) der Maschine (M), zu verwendenden Werten für die Gewichtung (W), und Angaben (c) zur zu verwendenden Aktionsauswahlregel der Mehrzahl von Aktionsauswahlregeln, und gibt diese aus. Die zu verwendende Aktionsauswahlregel wird von der Steuereinrichtung (CTL) aus der Mehrzahl von Aktionsauswahlregeln ausgewählt, indem für jede der Mehrzahl von Aktionsauswahlregeln eine Abweichungsgröße berechnet wird betreffend eine Abweichung zwischen von einem Nutzer basierend auf Betriebs-Zustandssignalen (SO) vorgegebenen Steuersignalen und von der Steuereinrichtung (CTL) basierend auf den gleichen Betriebs-Zustandssignalen (SO) ermittelten Betriebs-Steuersignalen (AO).

FIG 1

**Beschreibung**

Die Erfindung betrifft ein computerimplementiertes Verfahren zum Steuern einer Maschine mittels einer lernbasierten Steuereinrichtung. Hierbei werden Betriebs-Zustandssignale der Maschine der zuvor trainierten Steuereinrichtung zur Verfügung gestellt und daraufhin Betriebs-Steuersignale von der Steuereinrichtung der Maschine zugeführt.

Zum Steuern von komplexen technischen Systemen, wie z.B. Robotern, Motoren, Fertigungsanlagen, Energieversorgungseinrichtungen, Gasturbinen, Windturbinen, Dampfturbinen, Fräsmaschinen oder anderen Maschinen werden im zunehmenden Maße datengetriebene Verfahren des maschinellen Lernens, insbesondere Verfahren des bestärkenden Lernens eingesetzt. Hierbei werden Steuerungsagenten, insbesondere künstliche neuronale Netze, anhand einer großen Menge von Trainingsdaten darauf trainiert, für einen jeweiligen Zustand des technischen Systems ein hinsichtlich einer vorgegebenen Zielfunktion optimiertes Steuersignal zum Steuern des technischen Systems zu generieren. Es kommen also Steuereinrichtungen zum Steuern technischer Systeme in Form von trainierten Steuerungsagenten, auch als Policy bezeichnet, zum Einsatz.

Durch die beim Training eingesetzte Zielfunktion kann insbesondere eine zu optimierende Performanz des technischen Systems, z.B. eine Leistung, ein Wirkungsgrad, ein Ressourcenverbrauch, eine Ausbeute, ein Schadstoffausstoß, eine Produktqualität und/oder andere Betriebsparameter des technischen Systems bewertet werden. Eine solche Zielfunktion wird häufig auch als Belohnungsfunktion, Kostenfunktion oder Verlustfunktion bezeichnet. Mittels eines solchen performanzoptimierenden Steuerungsagenten lässt sich die Performanz eines damit gesteuerten technischen Systems in vielen Fällen signifikant erhöhen. Doch birgt der produktive Einsatz eines solchen Steuerungsagenten auch Risiken, weil die ausgegebenen Betriebs-Zustandssignale häufig nicht erprobt und damit möglicherweise unzuverlässig oder hinsichtlich ihrer Folgen für den Zustand des technischen Systems schwer einzuschätzen sind. Dies gilt insbesondere unter Betriebsbedingungen, die von den Trainingsdaten nicht ausreichend abgedeckt sind. Daher wird erwogen, die Steuerung zumindest teilweise an vorgegebenen Aktionsauswahlregeln zu orientieren. Hierfür liegen also Regeln vor, welches Betriebs-Steuersignal bei Vorliegen eines bestimmten Betriebs-Zustandssignals ergehen soll. Dabei kann es sich z.B. um einen von einem Nutzer zuvor durchgeführten Steuerablauf handeln.

Der Erfindung liegt die Aufgabe zugrunde, ein Verfahren zum Steuern mittels einer lernbasierten Steuereinrichtung aufzuzeigen, das ein effizientes und sicheres Steuern einer Maschine ermöglicht.

Diese Aufgabe wird durch ein Verfahren mit den Merkmalen des Anspruchs 1 gelöst. Ferner sind Gegenstand der Erfindung eine entsprechende Steuereinrichtung, ein entsprechendes Computerprogramm, ein entsprechendes computerlesbares, vorzugsweise nichtflüchtiges, Speichermedium, und ein entsprechendes Übertragungssignal. Vorteilhafte Ausgestaltungen und Weiterbildungen sind Gegenstand von Unteransprüchen.

Das erfindungsgemäße computerimplementierte Verfahren dient dem Steuern einer Maschine mittels einer trainierten lernbasierten Steuereinrichtung. Das Training der Steuereinrichtung erfolgte zuvor unter Verwendung einer Zielfunktion, welche eine Gewichtung einer Performanz der Maschine gegenüber einer Abweichung von jeweils einer bestimmten Aktionsauswahlregel aus einer Mehrzahl von Aktionsauswahlregeln beinhaltet. Zur Steuerung der Maschine ermittelt die zuvor trainierte Steuereinrichtung Betriebs-Steuersignale basierend auf ihr zur Verfügung gestellten Betriebs-Zustandssignalen der Maschine, zu verwendenden Werten für die Gewichtung, und Angaben zur zu verwendenden Aktionsauswahlregel der Mehrzahl von Aktionsauswahlregeln, und gibt diese ermittelten Betriebs-Steuersignale aus. Hierbei wird die zu verwendende Aktionsauswahlregel von der Steuereinrichtung aus der Mehrzahl von Aktionsauswahlregeln ausgewählt. Dies erfolgt, indem für jede der Mehrzahl von Aktionsauswahlregeln eine Abweichungsgröße berechnet wird betreffend eine Abweichung zwischen von einem Nutzer basierend auf Betriebs-Zustandssignalen vorgegebenen Steuersignalen und von der Steuereinrichtung basierend auf den gleichen Betriebs-Zustandssignalen ermittelten Betriebs-Steuersignalen.

Der Steuereinrichtung ist der Zustand der Maschine insofern bekannt, als er durch das zuletzt empfangene Betriebs-Zustandssignal beschrieben wird. Basierend hierauf, sowie auf zu verwendenden Werten für die Gewichtung, sowie auf Angaben zur zu verwendenden Aktionsauswahlregel ermittelt die Steuereinrichtung eine an oder von der Maschine vorzunehmende Aktion, beschrieben durch das von der Steuereinrichtung ausgegebene Betriebs-Steuersignal. Diese Ermittlung eines geeigneten Betriebs-Steuersignals kann erfolgen, da die Steuereinrichtung während dem Training die Ermittlung von Betriebs-Steuersignalen erlernt hat, welche die Zielfunktion optimieren.

In die beim Training verwendete Zielfunktion gehen zwei Größen ein, und zwar einerseits die Performanz der Maschine und andererseits eine Abweichung von einer bestimmten Aktionsauswahlregel. Bei letzterer handelt es sich um eine Vorgabe, welches Betriebs-Steuersignal bei Vorliegen eines bestimmten Betriebs-Zustandssignals ergehen soll. Hierbei wird mit einer Mehrzahl von Aktionsauswahlregeln trainiert, so dass die Steuereinrichtung während dem Training lernt, orientiert an jeweils einer Aktionsauswahlregel aus dieser Mehrzahl zu steuern, wobei dieses Lernen für jede Aktionsauswahlregeln aus der Mehrzahl erfolgt.

Durch die Verwendung der beiden beschriebenen Größen in der Zielfunktion werden die Ziele einer möglichst großen Performanz und einer möglichst kleinen Abweichung von einer bestimmten Aktionsauswahlregel verfolgt. Da diese beiden Ziele nicht in jeder Situation gleich wichtig sind, erfolgt eine Gewichtung, so dass je nach verwendetem Wert für die Gewichtung eines der beiden Ziele mehr betont werden kann als das andere, oder sogar eines der beiden Ziele keine Rolle spielt und nur das andere Ziel berücksichtigt wird. Ein Wert für die Gewichtung wird von der Steuereinrichtung auch im laufenden Betrieb, also beim Steuern der Maschine verwendet. Diesem Wert entsprechend erfolgt auch die Steuerung der Maschine an den beiden erläuterten Zielen orientiert. Der hierfür verwendete Wert für die Gewichtung kann im Laufe der Zeit geändert werden.

Beim Training wurde nicht nur die Abweichung von einer einzigen Aktionsauswahlregel in der Zielfunktion berücksichtigt, vielmehr wurde eine Mehrzahl von Aktionsauswahlregeln bzw. die jeweilige Abweichung hiervon berücksichtigt. Dies ermöglicht es, die Steuerstrategie an verschiedene in den Trainingsdaten enthaltene Aktionsauswahlregeln anzupassen. Hierzu ist der Steuereinrichtung bekannt, welche der Mehrzahl von Aktionsauswahlregeln bei der Steuerung zu verwenden ist. Hierbei erfolgt nicht die Vorgabe einer zu verwendenden Aktionsauswahlregel von außen, vielmehr wählt die Steuereinrichtung selbst aus der Mehrzahl von Aktionsauswahlregeln die zu verwendende Aktionsauswahlregel aus.

Zur Auswahl der zu verwendenden Aktionsauswahlregel werden Abweichungsgrößen berechnet, und zwar eine eigene Abweichungsgröße für jede Aktionsauswahlregel der Mehrzahl von Aktionsauswahlregeln. Durch die Abweichungsgröße werden von einem Nutzer vorgegebene Steuersignale verglichen mit von der Steuereinrichtung ermittelten Betriebs-Steuersignalen. Diese ermittelten Betriebs-Steuersignale basieren auf den gleichen Betriebs-Zustandssignalen wie die Steuersignale des Nutzers. Diese Betriebs-Zustandssignale der Steuereinrichtung werden nicht ausgegeben, sondern von der Steuereinrichtung nur zum Zweck der Berechnung der Abweichungsgrößen ermittelt. Es kann hierdurch also für jede Aktionsauswahlregel bewertet werden, wie ähnlich sie dem Vorgehen des Nutzers ist. Auf diese Weise kann eine Aktionsauswahlregel ausgewählt und dann zur Steuerung verwendet werden, welche den Präferenzen des Nutzers möglichst nahekommt.

Bei der Berechnung der Abweichungsgröße können die Betriebs-Steuersignale von der Steuereinrichtung ermittelt werden basierend auf einem Wert für die Gewichtung, welcher die Performanz der Maschine mit Null gewichtet. Dieses Ausblenden der Performanz ermöglicht es, die Präferenzen des Nutzers mit den verschiedenen Aktionsauswahlregeln zu vergleichen, ohne Störeffekte durch eine Orientierung an einer Performanzerhöhung in Kauf nehmen zu müssen.

Die Abweichungsgröße kann berechnet werden für eine Reihe von von dem Nutzer vorgegebenen Steuersignalen. Hierzu kann der Nutzer die Maschine eine Weile steuern, wonach die Reihe von von dem Nutzer vorgegebenen Steuersignalen vorliegt. Eine entsprechende Reihe von Betriebs-Zustandssignalen kann auch für jede der Aktionsauswahlregeln durch die Steuervorrichtung ermittelt werden. Aus der Reihe der Nutzer-Steuersignale und jeweils einer Reihe von Betriebs-Steuersignalen für die Aktionsauswahlregeln kann dann die eine Abweichungsgröße für jede Aktionsauswahlregel gebildet werden.

Neben der zu verwendenden Aktionsauswahlregel können auch die zur Steuerung der Maschine zu verwendenden Werte für die Gewichtung von der Steuereinrichtung vorgegeben werden. Hierzu kann nach Auswahl der zu verwendenden Aktionsauswahlregel zunächst eine Gewichtung vorgegeben wird, welche die Performanz der Maschine gering gewichtet. Dies bewirkt, dass zu Beginn der Steuerung durch die Steuereinrichtung zunächst eine Steuerung nahe an den Präferenzen des Nutzers erfolgt. Diese geringe Gewichtung der Performanz kann beibehalten werden. Vorzugsweise jedoch wird mit zunehmender Zeit nach Anwendung der ausgewählten Aktionsauswahlregel die Performanz der Maschine höher gewichtet. Diese Steigerung kann nach einem vorgegebenen zeitlichen Schema erfolgen. Besser ist es jedoch, wenn das Ausmaß oder die Geschwindigkeit der Steigerung der Gewichtung der Performanz der Maschine durch die Steuereinrichtung berechnet wird, insbesondere abhängig gemacht wird von einem Vergleich der von der Steuereinrichtung ausgegebenen Betriebs-Steuersignale mit der zu verwendenden Aktionsauswahlregel. Hierdurch kann sichergestellt werden, dass die freie Optimierung der Performanz durch die Steuereinrichtung nicht dazu führt, dass der verwendeten Aktionsauswahlregel zu wenig gefolgt wird.

Zum Training wird vorzugsweise ein Performanzbewerter eingesetzt, der anhand eines Betriebs-Zustandssignals und eines Betriebs-Steuersignals eine Performanz der Maschine ermittelt, sowie ein Aktionsbewerter, der anhand des Betriebs-Zustandssignals und des Betriebs-Steuersignals eine Abweichung von der Aktionsauswahlregel ermittelt.

Bei der gesteuerten Maschine kann es sich z.B. um einen Roboter, einen Motor, eine Fertigungsanlage, eine Fabrik, eine Energieversorgungseinrichtung, eine Gasturbine, eine Windturbine, eine Dampfturbine, eine Fräsmaschine oder ein anderes Gerät oder eine andere Anlage handeln.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computerprogramm" und "der Computer" formuliert.

Im Folgenden wird die Erfindung anhand eines Ausführungsbei-spiels näher erläutert. Dabei zeigen:

Figur 1: eine Steuereinrichtung beim Steuern einer Maschine,

Figur 2: ein Training eines Steuerungsagenten der Steuereinrichtung,

Figur 3: ein Ablaufdiagramm.

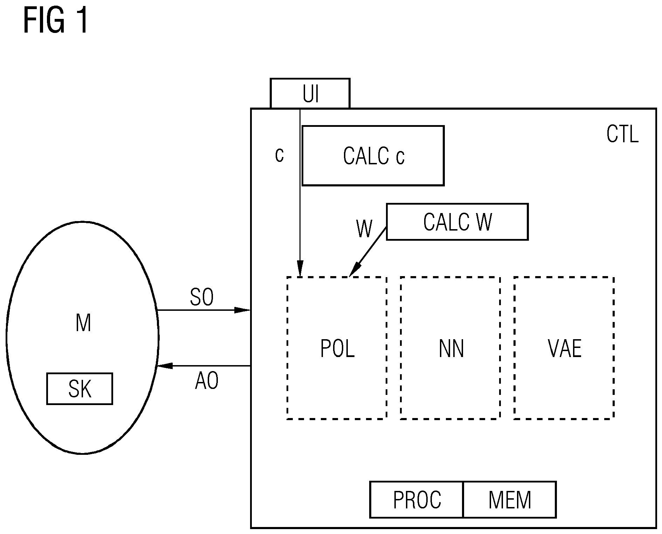

Figur 1 veranschaulicht eine Steuereinrichtung CTL beim Steuern einer Maschine M, z.B. eines Roboters, eines Motors, einer Fertigungsanlage, einer Fabrik, einer Energieversorgungseinrichtung, einer Gasturbine, einer Windturbine, einer Dampfturbine, einer Fräsmaschine oder eines anderen Gerätes oder einer anderen Anlage. Insbesondere kann auch eine Komponente oder ein Teilsystem einer Maschine oder einer Anlage als Maschine M aufgefasst werden. Die Maschine M verfügt über Sensorik SK zum vorzugsweisen fortlaufenden Erfassen und/oder Messen von Systemzuständen oder Teilsystemzuständen der Maschine M und gegebenenfalls auch ihrer Umgebung. Die Steuereinrichtung CTL ist in Figur 1 extern zur Maschine M dargestellt und mit dieser gekoppelt. Alternativ kann die Steuereinrichtung CTL auch ganz oder teilweise in die Maschine M integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern von Daten, z.B. von von der Steuereinrichtung CTL zu verarbeitenden Informationen, von der Steuereinrichtung CTL empfangenen Informationen, von der Steuereinrichtung CTL ausgegebenen Informationen. Weiterhin weist die Steuereinrichtung CTL einen lernbasierten Steuerungsagenten POL auf, der durch Verfahren des bestärkenden Lernens trainiert oder trainierbar ist. Ein solcher Steuerungsagent wird häufig auch als Policy oder kurz als Agent bezeichnet. Im vorliegenden Ausführungsbeispiel ist der Steuerungsagent POL als künstliches neuronales Netz implementiert. Ferner weist die Steuereinrichtung CTL ein lernbasiertes Transitionsmodell NN und einen lernbasierten Aktionsbewerter VAE auf. Der Steuerungsagent POL, das Transitionsmodell NN und der Aktionsbewerter VAE und damit die Steuereinrichtung CTL werden vorab anhand von vorgegebenen Trainingsdaten datengetrieben trainiert und so zum optimierten Steuern der Maschine M konfiguriert. Das Transitionsmodell NN und der Aktionsbewerter VAE werden nur zum Zweck des Trainings des Steuerungsagenten POL benötigt; das Steuern der Maschine M erfolgt dann durch den trainierten Steuerungsagenten POL.

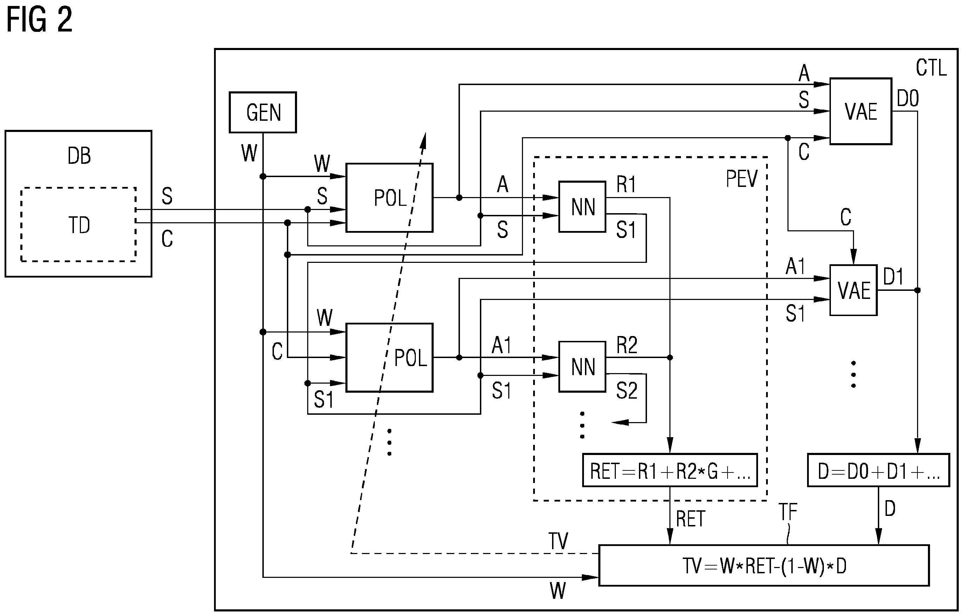

Das Training des Steuerungsagenten POL zielt insbesondere auf zwei Steuerkriterien ab. So soll die vom Steuerungsagenten POL gesteuerte Maschine M einerseits eine möglichst hohe Performanz erzielen, während andererseits zumindest unter manchen Umständen die Steuerung nicht zu sehr von einer Referenz Policy abweichen sollte. Die Performanz der Maschine M kann hierbei z.B. eine Leistung, einen Wirkungsgrad, einen Ressourcenverbrauch, eine Ausbeute, einen Schadstoffausstoß, eine Produktqualität und/oder andere Betriebsparameter der Maschine M betreffen. Bei der Referenz Policy handelt es sich um eine bestimmte Aktionsauswahlregel, also die Vorgabe von Steuersignalen, welche bei Vorliegen bestimmter Zustandssignale ergehen sollen. Eine Referenz Policy kann von einem in der Vergangenheit liegenden Steuern der Maschine M, einer dazu ähnlichen Maschine oder einer Simulation der Maschine M stammen, während diese von einem Referenz-Steuerungsagenten gesteuert wurde. Als Referenz-Steuerungsagent kann vorzugsweise ein überprüfter, validierter und/oder regelbasierter Steuerungsagent verwendet werden. Die Referenz Policy ist wie zu Figur 2 erläutert in den Trainingsdaten enthalten.

Zum optimierten Steuern der Maschine M durch den trainierten Steuerungsagenten POL werden Betriebs-Zustandssignale SO, d.h. im laufenden Betrieb der Maschine M ermittelte Zustandssignale, zur Steuereinrichtung CTL übermittelt. Die Betriebs-Zustandssignale SO spezifizieren jeweils einen Zustand, insbesondere einen Betriebszustand der Maschine M und gegebenenfalls ihrer Umgebung und werden vorzugsweise jeweils durch einen numerischen Zustandswert oder -vektor oder eine Zeitreihe von Zustandswerten oder -vektoren dargestellt. Durch die Betriebs-Zustandssignale SO können Messdaten, Sensordaten, Umgebungsdaten oder andere im Betrieb der Maschine M anfallende oder den Betrieb beeinflussende Daten dargestellt werden. Beispiele sind Daten über eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder ihrer Komponenten. Bei einer Produktionsanlage können die Betriebs-Zustandssignale SO auch eine Produktqualität oder eine andere Produkteigenschaft betreffen. Die Betriebs-Zustandssignale SO können zumindest teilweise durch die Sensorik SK gemessen werden und/oder mittels eines Simulators der Maschine M simulativ ermittelt werden.

Weiterhin verwendet die Steuereinrichtung CTL einen Gewichtswert W. Dieser kann von der Steuereinrichtung CTL selbst erzeugt oder durch einen Nutzer über die Nutzerschnittstelle UI eingegeben werden.

Durch den Gewichtswert W werden zwei Größen gegeneinander gewichtet, und zwar einerseits die Performanz der Maschine M und andererseits eine Abweichung der Steuerung durch den Steuerungsagenten POL von der Referenz Policy.

Die zur Steuereinrichtung CTL übermittelten Betriebs-Zustandssignale SO werden zusammen mit dem Gewichtswert W in den trainierten Steuerungsagenten POL als Eingabesignale eingespeist. Anhand eines jeweils zugeführten Betriebs-Zustandssignals SO und Gewichtswerts W generiert der trainierte Steuerungsagent POL ein jeweiliges optimiertes Betriebs-Steuersignal AO. Letzteres spezifiziert hierbei eine oder mehrere an der Maschine M vornehmbare Steueraktionen. Die generierten Betriebs-Steuersignale AO werden vom Steuerungsagenten POL bzw. von der Steuereinrichtung CTL zur Maschine M übermittelt. Durch die übermittelten Betriebs-Steuersignale AO wird die Maschine M in optimierter Weise gesteuert, indem die durch die Betriebs-Steuersignale AO spezifizierten Steueraktionen an der Maschine M ausgeführt werden.

Durch den Gewichtswert W kann der trainierte Steuerungsagent POL im laufenden Betrieb der Maschine M sowohl darauf eingestellt werden, bei der Ermittlung von optimierten Betriebs-Steuersignalen AO eine Nähe zur Referenz Policy höher zu gewichten als die Performanz der Maschine M, als auch umgekehrt eine Nähe zur Referenz Policy niedriger zu gewichten als die Performanz der Maschine M.

Zunächst wird der Steuerungsagent POL unter Verwendung der Trainingsdaten TD der Datenbank DB trainiert. Diese Trainingsdaten enthalten eine Vielzahl von Datenpunkten, wobei im einfachen Fall jeder Datenpunkt ein Tupel ist aus einem Zustandssignal, einem Steuersignal, einem Reward für die Durchführung der dem Steuersignal entsprechenden Steueraktion ausgehend vom jeweiligen Zustandssignal - dies ist gleich der Performanz der Maschine nach Durchführung der entsprechenden Steueraktion - , sowie einem Folgezustand, welcher sich aus der Anwendung der jeweiligen dem Steuersignal entsprechenden Steueraktion ergibt. Die gleichen Trainingsdaten TD wurden zuvor auch für das Training des Transitionsmodells NN und des Aktionsbewerters VAE verwendet. Die Trainingsdaten enthalten die Referenz Policy, indem jeder Datenpunkt ein Zustandssignal und ein hierzu gehöriges Steuersignal enthält. Hierbei ist es möglich, dass die gesamte Referenz Policy umfangreicher ist als der in den Trainingsdaten enthaltene Teil. Denn es kann sein, dass durch die Trainingsdaten nicht der gesamte Zustands/Aktionsraum abgedeckt ist, so dass es von dem Erzeuger der Referenz Policy produzierte Paare aus Zustandssignal und Steuersignal gibt, welche nicht Teil der Trainingsdaten sind.

Die geschilderte Ausgestaltung der Trainingsdaten als Vierertupel, wobei das hierin enthaltene Zweiertupel aus Zustandssignal und hierzu gehörigem Steuersignal die Referenz Policy darstellt, ist für viele Anwendungen nicht ausreichend. Denn die Referenz Policy entspricht der Steuervorgehensweise eines bestimmten Nutzers oder einer bestimmten die den Trainingsdaten entsprechende Steuerung durchgeführt habenden Instanz, im Folgenden zusammenfassend als Controller bezeichnet. In Realität wird es eine Mehrzahl an Controllern geben, die die Maschine in der Vergangenheit gesteuert und hierdurch einen Datensatz an Trainingsdaten erzeugt haben. Diese verschiedenen Controller haben unter Umständen verschiedene Steuerstrategien verfolgt. Üblicherweise wird beim Training ein Steuerverhalten in der Form a = b(s) gelernt, wobei s das Zustandssignal ist, b das zu erlernende Modell und a das Steuersignal. Wenn verschiedene Controller die Trainingsdaten erzeugt haben, existieren für das gleiche Zustandssignal s verschiedene Steuersignale a1 und a2. Daher ist es sinnvoll, diese verschiedenen Datensätze bei der Steuerung durch den Steuerungsagenten POL getrennt voneinander zu berücksichtigen. Der übliche Trainingsansatz wird also erweitert auf a = b(s, c), wobei es sich bei c um eine Controller-Angabe handelt.

Es wird also davon ausgegangen, dass nicht nur eine Referenz Policy vorhanden ist, bezüglich derer eine Abweichung bewertet wird, sondern mehrere. Dies erfolgt, indem die Datenpunkte der Trainingsdaten außer dem oben bereits genannten Vierertupel aus einem Zustandssignal, einem Steuersignal, einem Reward und einem Folgezustand eine weitere Größe enthalten, und zwar die Controller-Angabe. Diese Controller-Angabe zeigt an, welcher Controller den jeweiligen Datenpunkt erzeugt hat. Bei einem solchen die Trainingsdaten produzierenden Controller kann es sich z.B. um einen menschlichen Nutzer handeln, welcher händisch Steuerbefehle eingegeben hat, um auf Regeln basierte programmierte Steuerungen, oder auch um einen mit bestärkendem Lernen trainierten Agenten.

Ein Ablauf des Trainings des Steuerungsagenten POL wird mit Bezugnahme auf Figur 2 näher erläutert. Das Training des Steuerungsagent POL erfolgt derart, dass eine relative Gewichtung der beiden Optimierungskriterien Performanz der Maschine M und Nähe zu einer Referenz Policy durch den Gewichtswert W im laufenden Betrieb des trainierten Steuerungsagenten POL verändert werden kann. Außerdem liegen mehrere Referenz Policies vor. Das zu erlernende Verhalten kann also beschrieben werden mit a = b(s, W, c).

Figur 2 veranschaulicht ein Training des Steuerungsagenten POL mittels des trainierten Transitionsmodells NN sowie des trainierten Aktionsbewerters VAE. Zur Illustration aufeinanderfolgender Arbeitsschritte sind in Figur 2 jeweils mehrere Instanzen des Steuerungsagenten POL, des trainierten Transitionsmodells NN sowie des trainierten Aktionsbewerters VAE dargestellt. Die verschiedenen Instanzen können insbesondere verschiedenen Aufrufen oder Auswertungen von Routinen entsprechen, mittels derer der Steuerungsagent POL, das trainierte Transitionsmodell NN bzw. der trainierte Aktionsbewerter VAE implementiert ist.

Das trainierte Transitionsmodell NN, welches insbesondere als künstliches neuronales Netz implementiert sein kann, wurde darauf trainiert, anhand eines jeweiligen Zustandssignals und eines jeweiligen Steuersignals einen aus Anwendung der entsprechenden Steueraktion resultierenden Folgezustand der Maschine M sowie einen daraus resultierenden Performanzwert der Maschine M, den Reward für die Anwendung der entsprechenden Steueraktion, möglichst genau vorherzusagen. Das Training eines solchen Transitionsmodells NN wird z.B. in den Veröffentlichungen EP 3940596 A1 und EP 4235317 A1 beschrieben.

Anstelle eines Transitionsmodells NN können auch andersartige Modelle zur Bewertung des Rewards Einsatz finden, z.B. eine Wertfunktion (englisch: value function).

Der trainierte Aktionsbewerter VAE, bei welchem es sich insbesondere um einen variationalen Autoencoder handeln kann, der als feed-forward neuronales Netz implementiert ist, bewertet beliebige Paare aus jeweils einem Zustandssignal und einem Steuersignal, indem für das Paar ein Reproduktionsfehler D ermittelt wird. Der Reproduktionsfehler D ist hierbei ein Maß dafür, wie gut ein Zustandssignal-Steuersignal-Paar durch die Trainingsdaten TD abgedeckt ist, bzw. wie häufig oder wie wahrscheinlich es dort vorkommt. Da die Trainingsdaten TD wie oben erläutert die Referenz Policy enthalten, zeigt der Reproduktionsfehler an, wie stark das Zustands-Steuersignal-Paar von der Referenz Policy abweicht. Das Training eines solchen Aktionsbewerters VAE wird z.B. in den Veröffentlichungen EP 3940596 A1 und EP 4235317 A1 beschrieben, wobei dort die Referenz Policy als vorgegebener Steuerablauf bezeichnet ist. In Ergänzung zur in der oben genannten Veröffentlichung beschriebenen Vorgehensweise verwendet der Aktionsbewerter VAE während des Trainings die Controller-Angabe. Denn im operativen Einsatz soll der Aktionsbewerter VAE die Abweichung zu jeder der mehreren Referenz Policies prädizieren können.

Wie oben bereits erwähnt, soll der Steuerungsagent POL darauf trainiert werden, zu einem jeweiligen Zustandssignal S der Maschine M ein Steuersignal A auszugeben, das einerseits hinsichtlich einer resultierenden Performanz der Maschine M sowie andererseits hinsichtlich einer Nähe zum bzw. einer Abweichung von einer Referenz Policy optimiert ist. Offensichtlich kann die Nähe zu einer Referenz Policy auch durch eine negativ gewichtete Abweichung von der jeweiligen Referenz Policy dargestellt werden und umgekehrt. Die Optimierung zielt dabei ab auf höhere Performanz und größere Nähe zum bzw. kleinere Abweichung von der Referenz Policy. Die Gewichtung der beiden Optimierungskriterien Performanz und Nähe bzw. Abweichung ist durch den Gewichtswert W einstellbar.

Der Gewichtswert W ist zwischen 0 und 1 einstellbar. Bei einem Gewichtswert von W=1 soll durch den trainierten Steuerungsagenten POL ein ausschließlich die Performanz optimierendes Steuersignal A ausgegeben werden, während bei einem Gewichtswert von W=0 ein ausschließlich die Abweichung von einer Referenz Policy minimierendes Steuersignal A ausgegeben werden soll. Bei Gewichtswerten zwischen 0 und 1 sollen die beiden Optimierungskriterien entsprechend anteilig gewichtet werden. Zum Training des Steuerungsagenten POL für unterschiedliche Gewichtswerte werden durch einen Generator GEN der Steuereinrichtung CTL eine Vielzahl von Gewichtswerten W vorzugsweise zufallsbasiert erzeugt, welche im Intervall von 0 bis 1 liegen. Die vom Generator GEN erzeugten Gewichtswerte W werden wie in Figur 2 zu sehen sowohl in den zu trainierenden Steuerungsagenten POL als auch in eine durch das Training zu optimierende Zielfunktion TF eingespeist.

Zum Training des Steuerungsagenten POL werden Zustandssignale S der Trainingsdaten TD in großer Menge als Eingabesignale in den Steuerungsagenten POL eingespeist. Parallel dazu werden diese Zustandssignale S auch in das trainierte Transitionsmodell NN sowie in den trainierten Aktionsbewerter VAE als Eingabesignale eingespeist. Ausgehend vom jeweiligen Zustandssignal S werden durch das trainierte Transitionsmodell NN die aus der Anwendung eines Steuersignals A resultierenden Folgezustände der Maschine M vorhergesagt. Darüber hinaus wird das durch das jeweilige Zustandssignal S und zugehörige Steuersignal A gebildete Paar durch den trainierten Aktionsbewerter VAE bewertet. Ferner erhält der Steuerungsagent POL aus den Trainingsdaten TD die zu dem Zustandssignal S gehörige Controller-Angabe c. Diese wird auch dem Aktionsbewerter VAE zur Verfügung gestellt, so dass dieser prädizieren kann, wie die Abweichung des jeweiligen Paares (S, A) von den Trainingsdaten des jeweiligen Controllers sind.

Durch den Steuerungsagenten POL wird aus dem jeweiligen Zustandssignal S ein Ausgabesignal abgeleitet und als Steuersignal A ausgegeben. Das Steuersignal A wird dann zusammen mit dem jeweiligen Zustandssignal S in das trainierte Transitionsmodell NN eingespeist, das daraus einen Folgezustand vorhersagt und ein diesen spezifizierendes Folgezustandssignal S1 sowie einen zugehörigen Performanzwert R1 ausgibt. Darüber hinaus wird das Steuersignal A neben dem jeweiligen Zustandssignal S in den trainierten Aktionsbewerter VAE eingespeist, der daraus einen Reproduktionsfehler D0 für das Paar aus Zustandssignal S und Steuersignal A - bezogen auf die Controller-Angabe c - ermittelt und ausgibt. Wie oben erläutert, kann der Reproduktionsfehler als Maß für eine Abweichung von Steuersignalen von den durch die jeweilige Referenz Policy vorgegebenen Steuersignalen angesehen werden.

Das Folgezustandssignal S1 wird wiederum in den Steuerungsagenten POL eingespeist, der daraus ein nächstes Steuersignal A1 für diesen Folgezustand ableitet. Das Steuersignal A1 wird zusammen mit dem Folgezustandssignal S1 in das trainierte Transitionsmodell NN eingespeist, das daraus einen weiteren Folgezustand vorhersagt und ein diesen spezifizierendes Folgezustandssignal S2 sowie einen zugehörigen Performanzwert R2 ausgibt. Darüber hinaus wird das Steuersignal A1 zusammen mit dem Folgezustandssignal S1 in den trainierten Aktionsbewerter VAE eingespeist, der daraus einen Reproduktionsfehler D1 für das Paar aus Zustandssignal S1 und Steuersignal A1, wiederum bezogen auf die Controller-Angabe c, ermittelt und ausgibt.

Die vorstehenden Schritte können iterativ wiederholt werden, wobei Performanzwerte und Reproduktionsfehler für weitere Folgezustände ermittelt werden. Die Iteration kann bei Vorliegen einer Abbruchbedingung beendet werden, z.B. bei Überschreiten einer vorgegebenen Anzahl von Iterationen. Auf diese Weise kann eine mehrere Zeitschritte umfassende, von Folgezustand zu Folgezustand weiterschreitende, in die Zukunft extrapolierte Steuertrajektorie mit zugehörigen Performanzwerten R1, R2, ... und Reproduktionsfehlern D0, D1, ... ermittelt werden. Eine solche Extrapolation wird häufig auch als Roll-Out oder virtueller Roll-Out bezeichnet.

Aus den Performanzwerten R1, R2, ... einer jeweiligen Steuertrajektorie wird eine über mehrere Zeitschritte kumulierte Gesamtperformanz RET dieser Steuertrajektorie ermittelt. Eine solche kumulierte Gesamtperformanz wird beim bestärkenden Lernen als Return bezeichnet. Die Gesamtperformanz RET wird vorzugsweise dem jeweiligen Zustandssignal S mit der Controller-Angabe c am Anfang der jeweiligen Steuertrajektorie zugeordnet und bewertet so eine Fähigkeit des Steuerungsagenten POL, zum jeweiligen Zustandssignal S mit der Controller-Angabe c ein Steuersignal A zu ermitteln, das eine über mehrere Zeitschritte performante Steuersequenz einleitet. Zur Ermittlung der Gesamtperformanz RET werden die für zukünftige Zeitschritte ermittelten Performanzwerte R1, R2, ... diskontiert, d.h. mit für jeden Zeitschritt kleiner werdenden Gewichten versehen. Als konkretes Beispiel kann die Gesamtperformanz RET als gewichtete Summe der Performanzwerte R1, R2, ... berechnet werden, deren Gewichte einem mit jedem Zeitschritt in die Zukunft kleiner werdenden Diskontierungsfaktor < 1 entsprechen. Auf diese Weise kann die Gesamtperformanz RET z.B. ermittelt werden gemäß $RET = R1 + R2*G + R3*G^2 + R4*G^3 + ....$ Für G kann z.B. ein Wert von 0,99, 0,9, 0,8 oder 0,5 eingesetzt werden. Alternativ kann die Gesamtperformanz auch ohne Diskontierung berechnet werden bzw. ein Diskontierungsfaktor von 1 verwendet werden.

Das Transitionsmodell NN sowie das vorstehende Diskontierungsverfahren bilden zusammen den Performanzbewerter PEV, der anhand von Steuersignalen A, A1, ... und Zustandssignalen S, S1, ... eine aus Anwendung der Steuersignale resultierende Gesamtperformanz RET der Maschine M ermittelt. Alternativ oder zusätzlich kann der Performanzbewerter PEV auch mittels eines Q-Learning-Verfahrens realisiert und darauf trainiert werden, die über einen zukünftigen Zeitraum kumulierte Gesamtperformanz RET zu ermitteln.

Weiterhin wird aus den Reproduktionsfehlern D0, D1, ... der jeweiligen Steuertrajektorie ein über mehrere Zeitschritte kumulierter Gesamt-Reproduktionsfehler D ermittelt. Letzterer dient im weiteren Verfahren als Maß für die Abweichung dieser Steuertrajektorie von der jeweiligen Referenz Policy. Im vorliegenden Ausführungsbeispiel wird der Gesamt-Reproduktionsfehler D als Summe über die einzelnen Reproduktionsfehler D0, D1, ... ermittelt gemäß

$$D = D0 + D1 + ....$$

Die jeweils ermittelte Gesamtperformanz RET und der jeweils ermittelte Gesamt-Reproduktionsfehler D werden beide in die zu optimierende Zielfunktion TF eingespeist. Durch die Zielfunktion TF werden die Gesamtperformanz RET und der Gesamt-Reproduktionsfehler D mit dem jeweiligen Gewichtswert W gewichtet, der auch zusammen mit dem jeweiligen Zustandssignal S in den Steuerungsagenten POL eingespeist wurde. Durch ein die Zielfunktion TF optimierendes Training kann der Steuerungsagent POL also darauf trainiert werden, bei Eingabe eines Zustandssignals S und eines Gewichtswerts W ein Steuersignal A auszugeben, das die Zielfunktion TF gemäß dem eingegebenen Gewichtswert W zumindest im Mittel optimiert.

Im vorliegenden Ausführungsbeispiel ermittelt die Zielfunktion TF aus der Gesamtperformanz RET, dem Gesamt-Reproduktionsfehler D, sowie dem Gewichtswert W einen Zielwert TV der Zielfunktion TF gemäß $TV = W*RET - (1-W)*D$. Da angestrebt wird, dass die Steuertrajektorie der jeweiligen Referenz Policy möglichst nahe ist, geht der Gesamt-Reproduktionsfehler D in den Zielwert TV mit negativem Vorzeichen ein. Gegebenenfalls kann die Gesamtperformanz RET und/oder der Gesamt-Reproduktionsfehler D vor Berechnung des Zielwerts TV noch mit einem jeweils konstanten Normierungsfaktor versehen werden.

Der ermittelte Zielwert TV wird dem jeweiligen Zustandssignal S und der zugehörigen Controller-Angabe c am Anfang der jeweiligen Steuertrajektorie zugeordnet. Der jeweilige Zielwert TV bewertet so eine aktuelle Fähigkeit des Steuerungsagenten POL, zum jeweiligen Zustandssignal S mit der Controller-Angabe c eine entsprechend dem Gewichtswert W sowohl performanzoptimierende als auch dieser Referenz Policy nahe Steuersequenz einzuleiten. Zum Trainieren des Steuerungsagenten POL, d.h. zum Optimieren seiner Verarbeitungsparameter, werden die ermittelten Zielwerte TV -wie in Figur 2 durch einen strichlierten Pfeil angedeutet - zum Steuerungsagenten POL zurückgeführt. Die Verarbeitungsparameter des Steuerungsagenten POL werden dabei so eingestellt bzw. konfiguriert, dass die Zielwerte TV zumindest im Mittel maximiert werden. Zur konkreten Durchführung des Trainings kann dabei auf eine Vielzahl von effizienten Standardverfahren, insbesondere den stochastischen Gradientenabstieg, populationsbasierte Optimierungsverfahren, oder andere Methoden des überwachten (supervised) Lernens, zurückgegriffen werden.

Nach erfolgreichem Training des Steuerungsagenten POL kann dieser, wie zu Figur 1 beschrieben, zum optimierten Steuern der Maschine M verwendet werden. Hierzu benötigt der trainierte Steuerungsagent POL ein Betriebs-Zustandssignal, eine Controller-Angabe c und einen Gewichtswert W und gibt basierend hierauf ein Betriebs-Steuersignal aus. Dabei kann die Gewichtung der Optimierungskriterien Performanz und Nähe zur Referenz Policy im laufenden Betrieb durch Vorgabe eines Wertes für W eingestellt und verändert werden. Auf diese Weise kann die Steuerung der Maschine M darauf abgestimmt werden, ob eher die Performanz oder die Zuverlässigkeit höher gewichtet werden soll.

Der jeweils anzuwendende Referenz Policy kann hierbei durch Angabe einer Controller-Angabe c von einem Nutzer explizit über die Nutzerschnittstelle UI vorgegeben werden. Wenn der Nutzer also weiß, dass er ähnlich dem Controller Nummer 3 gesteuert haben möchte, kann er c=3 und z.B. W=0.1 vorgeben. Dies bedeutet eine starke Orientierung an dem Controller Nummer 3, da ein kleiner Wert für W eingestellt ist, mit ein wenig Spielraum für die Steuereinrichtung CTL zur Optimierung der Performanz. Die Entscheidung durch den Nutzer für einen in den Trainingsdaten enthaltenen Controller gilt umso mehr, wenn der Nutzer identisch mit einem dieser Controller ist.

Wenn der Nutzer jedoch nicht weiß, an welchem Controller er sich orientieren möchte, kann der Bestandteil CALC c der Steuereinrichtung CTL verwendet werden, um einen geeigneten Wert für c zu bestimmen. Dies erfolgt, indem die Steuerentscheidungen des Nutzers beobachtet werden, um so seine Präferenzen festzustellen und c dann entsprechend automatisch einzustellen. Hierzu steuert der Nutzer die Maschine M für eine ausreichend lange Zeit. Hiermit liegt eine Steuersequenz $a_1$, $a_2$, ... , $a_H$ mit H Steuerschritten vor, wobei der Index die Zeit bzw. die Steuerschritte indiziert.

Für jeden Steuerschritt wird die Distanz zwischen dem jeweiligen Steuersignal $a_i$, das durch den Nutzer vorgegeben wurde, und einem Steuersignal AO, welches die Steuereinrichtung CTL basierend auf dem jeweiligen Zustandssignal SO ausgegeben hätte. Zur Bestimmung dieses fiktiven Steuersignals AO wird dem Steuerungsagenten POL der Wert W=0 vorgegeben, d.h. die Steuerung soll sich ausschließlich an der Referenz Policy orientieren. Ferner wird ein derartiges fiktives Steuersignal für jeden Wert der Controller-Angabe c berechnet. Es liegt somit neben der Steuersequenz $a_1$, $a_2$, ... , $a_H$ des Nutzers für jede Controller-Angabe c eine fiktive Steuersequenz $AO_{c1}, AO_{c2}, ... , AO_{c,H}$ vor. Somit können für jeden Steuerschritt die Distanzen $a_i$ - $AO_{c,i}$ berechnet werden. Für jeden Wert der Controller-Angabe c werden diese Distanzen der H Zeitpunkte zu einer Gesamtdistanz zusammengefasst, z.B. als mittlere quadratische Abweichung. Diejenige Controller-Angabe c, für welche die geringste Gesamtdistanz errechnet wurde, wird nun durch den Bestandteil CALC c als Wert für c für die folgende Steuerung der Maschine M durch die Steuereinrichtung CTL vorgegeben und von dem Steuerungsagenten POL verwendet. Der Nutzer muss nach Beendigung der H Steuerschritte keine weitere Steuerung mehr vornehmen, dies erfolgt autark durch die Steuereinrichtung CTL. Es ist jedoch möglich, dass der Nutzer eingreift und die Steuerung selbst durchführt, wenn er hierfür Bedarf sieht. Ferner ist es möglich, dass die Steuereinrichtung CTL nach der Bestimmung des geeignetsten Wertes für c den Nutzer fragt, ob dieser Wert angewendet werden soll.

Eine geeignete Einstellung der Gewichtung W während der Laufzeit wird im Folgenden beschrieben. Hierfür wird der Bestandteil CALC W der Steuereinrichtung CTL verwendet, welcher den Gewichtswert W berechnet und dem Steuerungsagent POL zur Steuerung der Maschine M zur Verfügung stellt. Wenn die Steuereinrichtung CTL wie beschrieben den Wert für c durch Beobachtung des Nutzers bestimmt und dann zur autarken Steuerung der Maschine M verwendet, ist es sinnvoll, dass die Steuereinrichtung CTL auch einen Wert für W vorgibt. Hierzu kann zu Beginn nach der erfolgten Bestimmung von c zunächst ein kleiner Wert für W verwendet werden. Dies bedeutet, dass eine Steuerung erfolgt, die stark an der dem Wert von c entsprechenden Referenz Policy orientiert ist. Mit zunehmender Zeit kann der Wert für W gesteigert werden, um der Steuereinrichtung CTL hiermit die Möglichkeit zu geben, die Performanz der Maschine M zu optimieren.

Vorteilhaft für die Bestimmung von W ist es ferner, den Abstand der Steuerung durch den Nutzer zu dem dem gewählten c entsprechenden Controller zu vergleichen mit dem Abstand der tatsächlichen Steuerung durch die Steuereinrichtung CTL zu dem dem gewählten c entsprechenden Controller. Die erste der beiden Größen ist die oben beschriebene Gesamtdistanz. Die zweite Größe kann berechnet werden, indem auf die gleiche Weise wie zur Gesamtdistanz erläutert die Steuersignale aus den Trainingsdaten des dem gewählten c entsprechenden Controllers mit den Steuersignalen AO der Steuereinrichtung CTL verglichen werden. Wenn beide Größen etwa gleich groß sind, kann ein großer Wert für W verwendet werden, da in diesem Fall die Abweichung von der dem gewählten c entsprechenden Referenz Policy für den Nutzer akzeptabel ist. Bei dieser akzeptablen Abweichung von der Referenz Policy kann die Steuereinrichtung CTL dann die Performanz der Maschine optimieren. Die zweite Größe, also die Abweichung der tatsächlichen Steuerung von der Referenz Policy kann kontinuierlich oder in bestimmten Zeitabständen wiederholt bestimmt werden, um den Wert für W gegebenenfalls anzupassen.

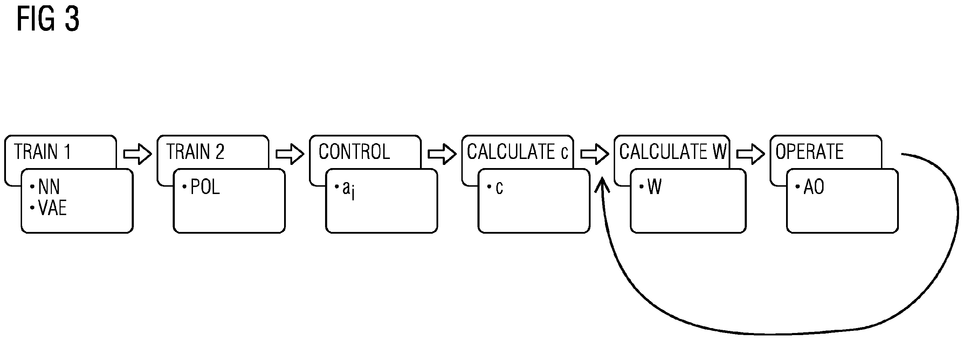

Zusammenfassend zeigt Figur 3 ein Ablaufdiagramm zu dem geschilderten Vorgehen. In einem dem Einsatz der Steuereinrichtung CTL zum Steuern der Maschine vorgelagerten Trainingsschritt TRAIN 1 werden zunächst das Transitionsmodell NN und der Aktionsbewerter VAE unter Verwendung von Trainingsdaten trainiert. In einem weiteren vorgelagerten Trainingsschritt TRAIN 2 wird dann der Steuerungsagent POL unter Verwendung der gleichen Trainingsdaten und mit Hilfe des trainierten Transitionsmodells NN und des trainierten Aktionsbewerters VAE trainiert. Nach dem Deployment beginnt im Schritt CONTROL der Nutzer, die Maschine zu steuern, wodurch eine Reihe von vom Nutzer generierten Steuersignalen $a_i$ vorliegt. Basierend hierauf wird durch die Steuereinrichtung CTL im Schritt CALCULATE c die Controller Angabe c ermittelt. Ferner wird im Schritt CALCULATE W auch der Gewichtswert W berechnet; alternativ kann dieser Schritt ausgelassen und der Wert für W vom Nutzer vorgegeben werden. Die beiden Werte für c und W werden dann im regulären Steuerbetrieb OPERATE, in welchem die Steuereinrichtung mit den drei trainierten Einheiten, dem Transitionsmodell NN, dem Aktionsbewerter VAE, sowie dem Steuerungsagent POL, die Steuerung der Maschine übernimmt, zur Steuerung durch den Steuerungsagent POL eingesetzt, welcher Steuersignale AO an die Maschine ausgibt. Es ist vorteilhaft, durch den von OPERATE zu CALCUATE W zurückgehenden Pfeil symbolisiert, den Wert für W kontinuierlich oder gelegentlich anzupassen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

**Patentansprüche**

1. Computerimplementiertes Verfahren zum Steuern einer Maschine (M) mittels einer trainierten lernbasierten Steuereinrichtung (CTL),

   wobei das Training der Steuereinrichtung (CTL) unter Verwendung einer Zielfunktion erfolgt ist, welche eine Gewichtung (W) beinhaltet einer Performanz der Maschine (M) gegenüber einer Abweichung von einer bestimmten Aktionsauswahlregel aus einer Mehrzahl von Aktionsauswahlregeln,
   bei dem
   die zuvor trainierte Steuereinrichtung (CTL) zur Steuerung der Maschine (M) Betriebs-Steuersignale (AO) ermittelt und ausgibt basierend auf ihr zur Verfügung gestellten Betriebs-Zustandssignalen (SO) der Maschine (M), zu verwendenden Werten für die Gewichtung (W), und Angaben (c) zur zu verwendenden Aktionsauswahlregel der Mehrzahl von Aktionsauswahlregeln,
   die zu verwendende Aktionsauswahlregel von der Steuereinrichtung (CTL) aus der Mehrzahl von Aktionsauswahlregeln ausgewählt wird, indem
   für jede der Mehrzahl von Aktionsauswahlregeln eine Abweichungsgröße berechnet wird betreffend eine Abweichung zwischen von einem Nutzer basierend auf Betriebs-Zustandssignalen (SO) vorgegebenen Steuersignalen und von der Steuereinrichtung (CTL) basierend auf den gleichen Betriebs-Zustandssignalen (SO) ermittelten Betriebs-Steuersignalen (AO).

2. Verfahren nach Anspruch 1, bei dem
   bei der Berechnung der Abweichungsgröße die Betriebs-Steuersignale (AO) von der Steuereinrichtung (CTL) ermittelt werden basierend auf einem Wert für die Gewichtung (W), welcher die Performanz der Maschine (M) mit Null gewichtet.

3. Verfahren nach Anspruch 1 oder 2, bei dem
   die Abweichungsgröße berechnet wird für eine Reihe von von dem Nutzer vorgegebenen Steuersignalen.

4. Verfahren nach einem der Ansprüche 1 bis 3, bei dem
   die zur Steuerung der Maschine (M) zu verwendenden Werte für die Gewichtung (W) von der Steuereinrichtung (CTL) vorgegeben werden, indem nach Auswahl und Verwendung der zu verwendenden Aktionsauswahlregel zunächst eine Gewichtung (W) vorgegeben wird, welche die Performanz der Maschine (M) gering gewichtet.

5. Verfahren nach Anspruch 4, bei dem
   die zur Steuerung der Maschine (M) zu verwendenden Werte für die Gewichtung (W) von der Steuereinrichtung (CTL) vorgegeben werden, indem mit zunehmender Zeit die Performanz der Maschine (M) gesteigert gewichtet wird.

6. Verfahren nach Anspruch 5, bei dem
   die zur Steuerung der Maschine (M) zu verwendenden Werte für die Gewichtung (W) von der Steuereinrichtung (CTL) vorgegeben werden, indem die Steigerung der Gewichtung der Performanz der Maschine (M) abhängt von einem Vergleich der von der Steuereinrichtung (CTL) ausgegebenen Betriebs-Steuersignale (AO) mit der zu verwendenden Aktionsauswahlregel.

7. Verfahren nach einem der Ansprüche 1 bis 6, bei dem zum Training

   ein Performanzbewerter (PEV) eingesetzt wird, der anhand eines Betriebs-Zustandssignals (SO) und eines Betriebs-Steuersignals (AO) eine Performanz der Maschine (M) ermittelt, und
   ein Aktionsbewerter (VAE) eingesetzt wird, der anhand des Betriebs-Zustandssignals (SO) und des Betriebs-Steuersignals (AO) eine Abweichung von der Aktionsauswahlregel ermittelt.

8.  Verfahren nach einem der vorhergehenden Ansprüche, **dadurch gekennzeichnet, dass** die Maschine (M) ein Roboter, ein Motor, eine Fertigungsanlage, eine Fabrik, eine Energieversorgungseinrichtung, eine Gasturbine, eine Windturbine, eine Dampfturbine, eine Fräsmaschine oder ein anderes Gerät oder eine andere Anlage ist.

9.  Steuereinrichtung (CTL) zum Steuern einer Maschine (M), eingerichtet zum Ausführen eines Verfahrens nach einem der Ansprüche 1 bis 8.

10. Computerprogramm, umfassend Befehle, die bei der Ausführung des Programms durch einen Computer diesen veranlassen, die Schritte des Verfahrens nach einem der Ansprüche 1 bis 8 auszuführen.

11. Computerlesbares Speichermedium (MEM) mit einem Computerprogramm nach Anspruch 10.

12. Übertragungssignal, das das Computerprogramm nach Anspruch 10 überträgt.

FIG 1

FIG 2

FIG 3

TRAIN 1
• NN
• VAE

TRAIN 2
• POL

CONTROL
• $a_i$

CALCULATE c
• c

CALCULATE W
• W

OPERATE
• AO

EP 4 600 764 A1

Europäisches
Patentamt

European
Patent Office

Office européen
des brevets

# EUROPÄISCHER RECHERCHENBERICHT

**Nummer der Anmeldung**

EP 24 15 6522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 235 317 A1 (SIEMENS AG [DE]) 30. August 2023 (2023-08-30) | 1,4-12 | INV. G05B13/02 |
| Y | * Absatz [0001] * | 2,3 | |
| | * Absatz [0006] * | | ADD. |
| | * Absatz [0028] - Absatz [0035] * | | B25J9/16 |
| | * Absatz [0048] * | | |
| | * Abbildung 1 * | | |
| | ----- | | |
| Y | US 2014/156085 A1 (MODI YASH [US] ET AL) 5. Juni 2014 (2014-06-05) * Absatz [0011] - Absatz [0012] * | 2,3 | |
| | ----- | | |
| A | ZHANG HENG ET AL: "A semantics-based dispatching rule selection approach for job shop scheduling", JOURNAL OF INTELLIGENT MANUFACTURING, SPRINGER US, NEW YORK, Bd. 30, Nr. 7, 18. April 2018 (2018-04-18), Seiten 2759-2779, XP036893580, ISSN: 0956-5515, DOI: 10.1007/S10845-018-1421-Z [gefunden am 2018-04-18] * das ganze Dokument * | 1-12 | |
| | ----- | | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 3. Juli 2024 | Lefeure, Guillaume |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2024

| Im Recherchenbericht angeführtes Patentdokument | Datum der Veröffentlichung | Mitglied(er) der Patentfamilie | Datum der Veröffentlichung |
|---|---|---|---|
| EP 4235317 A1 | 30-08-2023 | EP 4235317 A1 | 30-08-2023 |
| | | WO 2023160952 A1 | 31-08-2023 |
| US 2014156085 A1 | 05-06-2014 | US 8600561 B1 | 03-12-2013 |
| | | US 2014156085 A1 | 05-06-2014 |
| | | US 2015134122 A1 | 14-05-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3940596 A1

- EP 4235317 A1